# EUROPEAN PATENT APPLICATION

(11) **EP 3 026 962 A1**
(43) Date of publication of application: **01.06.2016**
(21) Application number: 14306891.4
(22) Date of filing: 26.11.2014
(51) Int. Cl.: H04W 52/02

(54) **Method and system for regulating power consumption**

(71) Applicant: ALCATEL LUCENT, 92100 Boulogne-Billancourt (FR)
(72) Inventor: Frizzell, Ronan, Dublin (IE); Boran, Aidan, Dublin (IE)
(74) Representative: Bryers LLP

(57) **Abstract**

A computer-implemented method, in a wireless sensor network comprises at least one node operable to receive power from one or more energy sources, for regulating power consumption of the or each node, the method comprising providing a power consumption profile for a first node representing power consumption of devices attached to or associated with the first node and its components, providing a power supply profile for a first energy source operable to supply power to at least the first node, the profile representing the power supply capabilities of the first energy source, and configuring one or more operational characteristics of the first node on the basis of the power consumption profile and the power supply profile.

## Description

### TECHNICAL FIELD

Aspects relate, in general to a method and system for regulating power consumption in a wireless sensor network.

### BACKGROUND

Wireless sensor networks (WSN) are considered to be an enabling technology for future "Smart" applications such as smart buildings and smart homes in which certain environmental characteristics of the home or building can be monitored and/or adjusted without significant (or any) intervention.

Typically, multiple sensors can be deployed at a given location, such as a home or office environment, to monitor one or more the characteristics such as temperature and light levels and so on. According to some parameters set by a user, certain actions can be performed if one or more of the characteristics fall outside of a desired range. For example, if there is a detected drop in the temperature in a room of a building which causes the temperature to fall below a predetermined level, the temperature of the room can be increased by switching on a heating apparatus of the room for example.

A bottleneck to the wide acceptance of WSN technology is the considerable technical expertise needed to implement WSN solutions.

### SUMMARY

According to an example, there is provided a computer-implemented method, in a wireless sensor network comprising at least one node operable to receive power from one or more energy sources, for regulating power consumption of the or each node, the method comprising providing a power consumption profile for a first node representing power consumption of devices attached to or associated with the first node and its components, providing a power supply profile for a first energy source operable to supply power to at least the first node, the profile representing the power supply capabilities of the first energy source, and configuring one or more operational characteristics of the first node on the basis of the power consumption profile and the power supply profile. The method can include generating a registration message for transmission from the first node in response to connection, linkage or recognition of the first energy source to or by the first node, the registration message including an identifier unique to the first energy source. The method can include transmitting the registration message to a remote device; and wherein configuring one or more operational characteristics of the first node includes, using the identifier of the first energy source, selecting, from multiple operational profiles, a first operational profile for the first node representing operational characteristics of the first node. Selecting the first operational profile can include using the identifier of the first energy source, determining the power supply profile of the first energy source, comparing the power supply capabilities of the first energy source to the multiple operational profiles, and selecting an operational profile matching the requirements of the power consumption profile for the first node. Configuring one or more operational characteristics of the first node can include selecting a power scheme for the first node, and adjusting the power consumption level of one or more devices attached to or associated with the first node, and/or its components, on the basis of the selected power scheme. A power consumption level can be adjusted by varying the duty cycle of a device of the first node and/or the duty cycle of radio transmissions of the first node and/or by disabling one or more devices of the first node and/or by varying the duty cycle of components within the first node. The method can further include configuring the one or more operational characteristics of the first node in response to a detected change in the output of the or each energy source.

According to an example, there is provided a system for regulating the power consumption of a node in a wireless sensor network comprising at least one node being operable to receive or draw power from one or more energy sources, the system including a remote device operable to store data representing a power consumption profile for a first node representing power consumption of devices attached to or associated with the first node and its components; and a power supply profile for a first energy source operable to supply power to at least the first node, the profile representing the power supply capabilities of the first energy source; the system including a processor operable to process the power consumption profile and the power supply profile and to configure one or more operational characteristics of the first node. The remote device can receive a registration message from a node in response to connection, linkage or recognition of an energy source to or by the node, the registration message including an identifier for the first energy source. The remote device can select, from multiple operational profiles, a first operational profile for the node representing operational characteristics for the node on the basis of the identifier of the energy source. The remote device can determine the power supply profile of the energy source using the identifier, compare the power supply capabilities of the energy source to the multiple operational profiles, and select an operational profile matching the requirements of the power consumption profile for the node. The remote device can transmit the selected operational profile to the node. The remote device can select a power scheme for the node to enable adjustment of the power consumption level of devices attached to or associated with the first node and/or adjustment of the power consumption level of components of the node. The remote device can generate a power scheme using historic data representing variations in power usage or consumption of the node. The remote device can generate a power scheme using historic data representing variations in power supply capabilities of the energy source.

### BRIEF DESCRIPTION OF THE DRAWINGS

Embodiments will now be described, by way of example only, with reference to the accompanying drawings, in which:
Figure 1 is a schematic representation of node according to an example;
Figure 2 is a schematic representation of a system according to an example;
Figure 3 is a schematic representation of a system according to an example;
Figure 4 is schematic representation of a node according to an example; and
Figure 5 is a set of tables depicting information that could be accessed by the service describing the different power consumption profiles of a node according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In a wireless sensor network deployment, in which one or more sensor nodes are deployed, the powering of each node can be problematic for various reasons. For example, battery replacement can be difficult, particularly if nodes are built into the fabric of the building or rooms in which the network is deployed. Energy harvesting technology can be used to significantly reduce battery replacement costs or remove the need for batteries altogether. The use of energy harvesters is therefore very appealing for long-life applications, and can include solar power, wind energy harvesting, and harvesting energy from other renewable sources for example.

However, energy harvesting technology introduces complexity to the deployment of a WSN that needs to be handled correctly if energy harvesting powered deployments are to be successful.

According to an example, a cloud based service is provided which can be used to provide a variety of energy related services to wireless sensor networks. Nodes in a network can be energy consumers (EC) or energy producers (EP). EC and EP nodes have energy profiles defined for them. Cloud-based services are defined for collections of EC and EP profiles to provide different services. For example, to regulate the energy usage of the system, profile matching can be used to ensure the power consumer nodes use less power than the producer nodes can provide. Learning and predictive services can also be provided as described in more detail below.

When using energy harvesting technology with wireless sensors it is often necessary to adjust the functionality and power consumption of a sensor board to react to changes in the amount of energy that can be provided by a particular energy harvesting device. The decisions that must be made to maintain WSN functionality for various energy harvesting devices is complex for non-technical users and can therefore pose a problem when using energy harvesting technology in WSN.

In an example, an energy source can communicate with a remote device, such as a cloud based device, to determine a configuration for a node of the network that can be assumed to enable its power consumption to match the power production of the energy source, or otherwise to match a desired profile for the node. This can remove the complexity of using energy harvesting technology from users of a WSN and significantly simplify the use of energy harvesting devices for users of all levels of technical expertise for example. Accordingly, a "plug-and-play" type solution is provided that significantly simplifies the commissioning of WSN and reduces cost for WSN operators. Such a solution enables the wider acceptance of WSN and thus unlocks value from the WSN market.

According to an example, devices that are powered by batteries can also benefit from the method and system as provided. For example, a user can identify a battery type in a similar way to that described above for energy harvesters and define a required lifetime. The information is relayed to the remote device where a set of instructions can be generated for the wireless device characteristics (radio/sensor duty cycle, etc.) that will ensure the required application lifetime is satisfied.

According to an example, a node of a wireless sensor network can include multiple devices attached to or associated with it, respective ones of which are operable to monitor one or more environmental (or other) characteristics of the region in which the node is deployed. For example, a node can include temperature and light sensing devices to monitor temperature and lux levels in the region. The node also includes various other components that are provided to enable the node to function, such as a wireless communications module that can transmit and receive data using any one of multiple radio frequency protocols such as Bluetooth, zigbee and so on, as well as being operable to enable the device to connect and communicate with a Wi-Fi network for example. Other components can include, but are not limited to, a memory such as a volatile or non-volatile memory device, a processor and input and output means such as sockets to enable wired connections to other devices, such as computers or other such devices for setup and/or diagnostics and so on, and audio or visual output means such as speakers and/or lights and so on to enable a visual or audible signal to be output from the node.

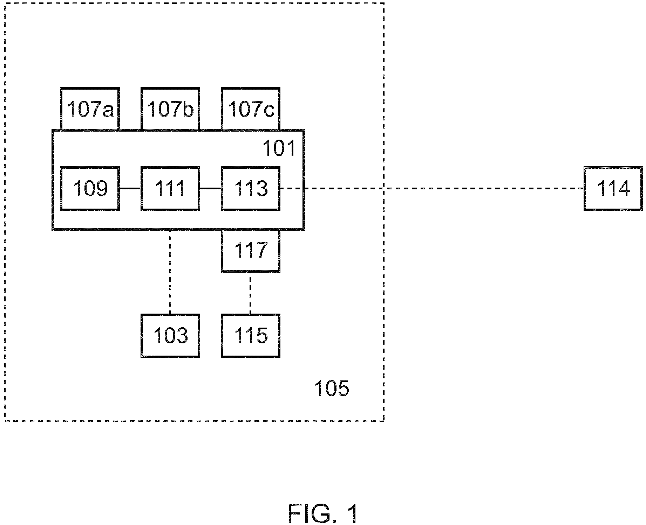

Figure 1 is a schematic representation of node according to an example. The node 101 is provided as part of a broader wireless sensor network 103 deployed in a building 105, which can be a residential or commercial property for example. The node 101 includes multiple devices 107a-c for monitoring various characteristics of the area of the building 105 in which the node is deployed, such as environmental characteristics for example, and for providing measurements representing the characteristics. A memory 109, processor 111, and wireless communication module 113 are provided for the node, and for example, measurements from devices 107a-c can be stored in memory 109, processed by processor 111, such as to format the measurements into a desired format for example, which can be transmitted to a remote device 114.

An energy source 115 is provided for the node 101, and can be a renewable energy source or a battery and so on. The node 101 may receive energy from other energy sources, and the source 115 may provide energy to other nodes of the network 103 as well as node 101.

In an example, a sensor 117 on node 101 is operable to read identity information from the energy source 115. For example, the energy source can be identified using the sensor 117 in a non-contact way such as by having a sensor on either the sensor node or the energy source 115 that can extract information from the other without them being mechanically linked together. For example, sensor 117 can be an RGB sensor reading a certain colour from a coloured patch or similar on the energy source 115 which can form a unique identifier for the energy source 115 in the form of an RGB code for the detected colour example. Another possibility is that the energy source includes an RFID tag with identity information. The sensor 117 can be an RFID reader operable to query an RFID tag in range and read the identifier. In an example, the sensor 117 can detect that the source 115 has been connected to or linked to the node 101 as a result of power supply to the node. For example, sensor 117 can monitor the power supply of the node 101 and determine when an energy source has been connected. The energy source 115 can supply an identification signal at the point of connection for receipt by processor 111 or sensor 117 to identify the energy source 115.

Each energy source (e.g. harvester) for a system can have a unique identifier. Alternatively, a single identifier can be used for every energy source of a given type.

The identity of the energy source 115 can be transmitted to the remote device 114. The identity data of the source 115 can include information representing the power supply characteristics or profile of the source 115, such as a measure of the power that can be provided by the source 115 for example.

At the remote device 114, data relating to the source 115 can be retrieved. For example, the device 114 can include data mapping identifiers of one or more energy sources to information relating to the sources, such as a power supply profile for the energy sources representing the power supply capabilities of the energy sources. For example, the information can be the power output of the device.

In an example, the remote device 114 can use the power supply profile mapped to an energy source 115 to provide data specifying instructions to configure one or more operational characteristics of the node 101 on the basis of a power consumption profile of the node and the power supply profile of the source 115. In an example, the configuration can be such to specify that the node should consume equal or less energy than the energy source 115 can generate.

According to an example, the operational characteristics can therefore be used to modify the power consumption profile of the node, and more particularly the devices and components of the node. For example, the instructions can specify radio transmission duty cycles of devices at the node, amounts of data to transmit, which sensors/devices at the node should be on/off, the sampling frequency of the devices and so on.

In an example, the energy source 115 can be a renewable source/energy harvesting device, but the same considerations apply in the case that the source 115 uses battery technology, when for example a certain lifetime (or data rate) is required. A battery to be used can be identified by the node 101. Another piece of information identifying the required lifetime or data rate can also be made available to the node 101. Both pieces of information can be uploaded to the remote device and the configuration of the node that ensures the required lifetime (or data rate) is reached can be retrieved and relayed to the mode. This removes the need for the user to manually reprogram a node to achieve shorter/longer lifetimes for example.

Accordingly, using data representing a power supply profile of an energy source that can supply power to a node in a wireless sensor network, a cloud based service operating from a remote device can be used to select appropriate power modes for the node to suit the characteristics of the energy source.

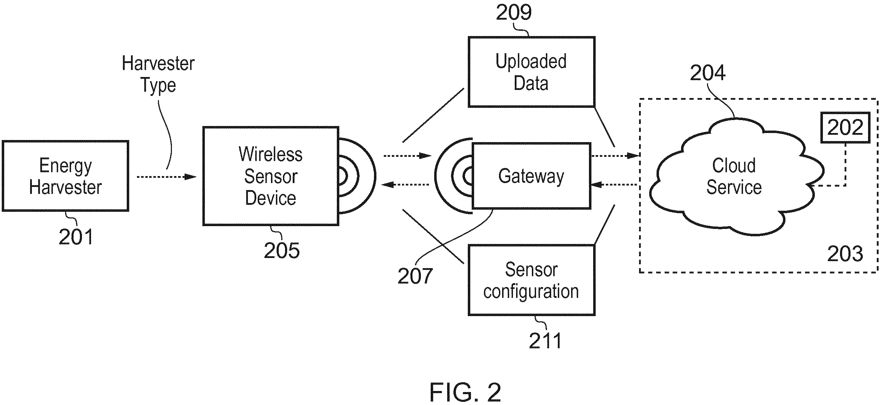

Figure 2 is a schematic representation of a system according to an example. An energy profile 202 which describes the power capabilities of the energy source/energy harvester 201 can be provided at a remote device 203 hosting a cloud service 204. This profile describes the energy generation capabilities of the harvester 201. Multiple profiles for multiple energy sources can be provided, and each profile is associated with a given energy harvester device using a unique identifier. Energy consumption characteristics in the form a power consumption profile for a node (wireless sensor device) 205 representing power consumption of devices attached to or associated with the node 205 and its components are provided at the device 203 for service 204. In an example, the node 205 includes multiple configurable sensors/devices, and the energy consumption of the other components on the sensor node can be configured. Multiple such profiles can be provided for multiple nodes in a wireless sensor network. In an example, the profiles describe the overall energy consumption of the nodes of the wireless sensor network.

As different energy source types are connected to the wireless sensor node 205, a registration process takes place which allows the unique identifier 209 of the energy source to be sent to the cloud service 204 via a gateway 207. On receipt of a registration message, the service 204 can generate different operational characteristics 211 for each device of the node 205 to balance the energy generated by the source 201 with the energy consumed by the sensor node 205.

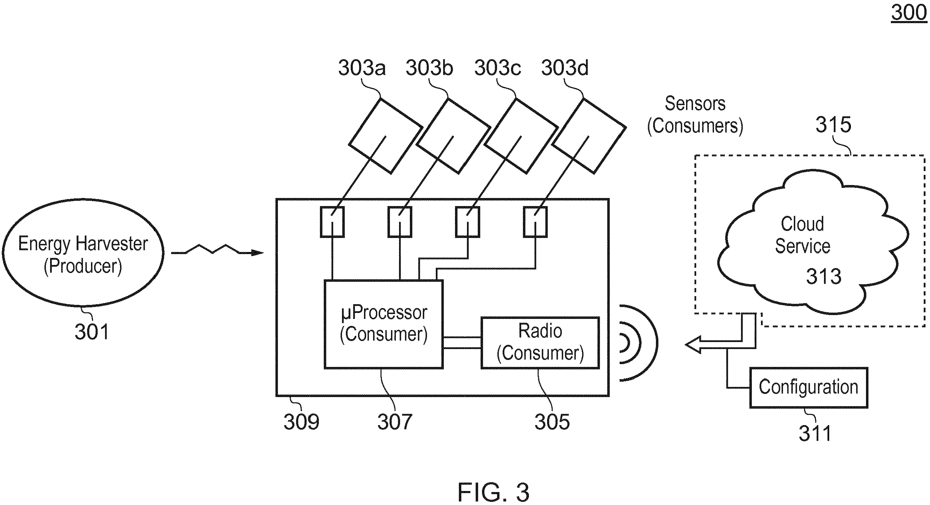

Figure 3 is a schematic representation of a system according to an example. An energy harvester/power source 301 is a producer of power for the system 300 while the devices 303a-d, radio elements 305 and microprocessor 307 of the node 309 are power consumers. Based on the power profile configuration information 311 received from the service 313 executing on remote device 315 the power each component consumes is automatically adjusted to ensure the overall power production and consumption behaviours are balanced and the wireless sensor device 309 can continue to remain active without user interference.

Different power schemes can be encoded in the service 313. A high data rate scheme might allow for very frequent transmission of data while sacrificing duration of operation. Another scheme might allow for long duration of operation but with a low rate of transmission. For sensor nodes with multiple devices, such as shown in figures 1 and 3 for example, other schemes can be created where some devices on the node are powered off in favour of other devices. In an example, to implement any given power scheme, power levels can be adjusted by changing the duty cycle of the radio transmissions from a node, the duty cycle of any attached devices, switching on or off particular devices or other components, etc. The configuration information can be selected from a database of fixed configurations and the total power consumption of each configuration is known. The service can enforce a rule to ensure the selected configuration consumes less power than the attached harvester can produce. An update to a sensor node configuration can occur at any stage during deployment, including at the initial configuration stage. This can ensure the system can react to sudden/unforeseen circumstances that occur rarely over the sensor network deployment.

According to an example, a matching service can be used in situations where the power consumption of all components and devices on a node is known. When the node has communicated the type of harvester it will be using to the service, configuration information can be generated by the service and this information can be transmitted to the node. In an example, the information can be a collection of instructions for the node to turn on or off certain devices, reduce/increase sensing intervals, increase/reduce radio duty cycles, and so on. These instructions are determined based on an energy balance between the power source capabilities (i.e. the harvester's ability to produce electrical power) and the consumption characteristics of the node components and devices. The instructions are generated to ensure that the energy consumption is not greater than the energy that can be produced by the harvester. This service therefore matches the node consumption to the harvester's production ability and allows automatic configuration of the node.

An extension of the above, where data on the deployment environment and the functionality of the harvester over time is taken into account and adjustments made to improve the performance of the system, can be used. The amount of energy a harvester can deliver to a node may depend on the energy in the surrounding environment. For example, the amount of energy for a particular indoor solar panel would be known approximately but this amount would vary for real-world deployments. The solar harvester may be placed near a window meaning more energy than expected would be harvested or it could be placed in a dull corridor and not receive the level of light to produce the expected amount of power. Similar arguments could be made for thermoelectric generators, where expected temperatures can fluctuate over time, or for vibration energy harvesters, where ambient vibrations can increase or decrease depending on activity in the surrounding area.

Accordingly, the service can track the amount of power a harvester produces over a given period of time and adjust the power consumption of a node based on these readings. For example, an energy source can supply periodic data representing power generation capabilities and/or power produced to provide historic data from which a pattern of power supply capability can be determined (e.g. less power generation and supply in a given period of the day, or at a certain time of year, or for a certain position for the harvester and so on).

This can enhance the performance of the energy harvesting powered wireless sensor deployment as it learns about the energy profile for a given location and can automatically adjust the power profile of a node to ensure that it can be powered indefinitely without user intervention for example. This can be useful for vibration energy harvesters or thermoelectric harvesters for example, so that the user does not need to carry out any site evaluation to determine what power a harvester can produce prior to deploying a network or node. A simpler but less accurate means of achieving a system that learns is to attach harvesters to sensor nodes for a limited "test period" to determine how much power they are producing. This information could be uploaded to the service where sensor configuration decisions could be made to ensure the node power consumption matches that of the harvester. This method can tell a user if the harvester location is suitable for powering a sensor node and/or be used to automatically configure the node based on the results from the "test period". Unlike the initial approach, the system does not continuously learn about the power producing capabilities of a harvester in a given environment. However, this might be acceptable in certain situations where ambient conditions are not ideal but are not changing much with time.

In an example, an advanced service involves prediction of future increased work load for a particular node to enable automatic adjustment of a power profile of the node in anticipation of this activity. This can be accomplished by the service monitoring activity (say daily activity) on each node in a network and learning the times when increased activity is expected for example. The power configuration of a node can then be changed prior to these busier times so more power can be directed to power storage devices for example. The power consumption could be increased during times of higher demand and could rely on the stored energy from the less busy time.

For example, it is typically more important for the quality of service for a building energy management system to be high during working hours than during the night/early morning. In such situations the service could instruct a node to conserve and store energy through reconfiguration of the power consumption profile during non-critical times in anticipation of more critical times. This is beneficial as it allows smaller and more cost-effective harvesters to be deployed, which lowers the capital costs for energy harvesting powered WSN.

In an example, an additional function may be that the service can monitor the overall wireless sensor network and if inefficiencies are detected the service can adjust the power levels of certain nodes to achieve more efficient network performance. For example, if nodes are clustered and temperature is being monitored the service could detect locations where there are only small variations in temperature and disable the monitoring of certain nodes to save energy without adversely affecting the quantity being measured.

Updating of the power profile can occur any number of times for different applications. For example, updates can occur once a day; until a suitable configuration has been achieved for a given deployment environment and power level produced by the harvester; or any time a change is needed to react to high or low demand times of day.

The same functionality for energy harvesters can also be applied to battery technology when a certain lifetime (or data rate) is required. The battery to be used can be identified using, for example, hardware on the node, such as sensor 117 that reads a colour from a chart of battery types and corresponding colors. Another chart could be made available that has colors that specify given time periods (or data rates) (e.g. 3 months = blue) and this information can also be assimilated by the node. Both pieces of information can be uploaded to a service and the configuration of the node that ensures the required lifetime (or data rate) is reached can be retrieved or generated and relayed to the node. This avoids the need for the user to reprogram the wireless device to achieve shorter/longer lifetimes.

The method and system provided has applicability to all energy harvesting powered wireless sensor network platforms and so can be deployed widely. It offers ease of configuration of an energy harvesting powered WSN, which may be valuable for large networks in order to control deployment time and cost. The following is a non-exhaustive list of application areas for the method and system as provided:
1. Monitoring of vast quantities of stock e.g. Agriculture applications where multiple nodes can be deployed to monitor crops throughout fields or in glasshouses. An example of this would be in light permeation measurements or monitoring of plant growth rates.
2. Remote locations - energy harvesting powered WSN are particularly beneficial in remote locations where it is costly to send people to find devices and replace batteries. The solution proposed here has the benefit of automatically configuring the wireless device for the attached energy harvester and, with the proposed learning algorithm, it has the ability to automatically react to changes in the ambient conditions in the remote location to ensure the wireless device remains in service. This is all achieved without user intervention through the services.
3. Hazardous environments - Where access to the nodes is constrained or difficult for safety reasons.

This solution is beneficial for rapid commissioning of all nodes powered either by energy harvesters or batteries. The auto-configuration of the power consumption characteristics is also relevant for battery powered devices, making this solution widely applicable to the WSN market.

In an example, a node can control the power modes of the consumers and producers connected to it. The node can calculate the input power it is receiving for any harvesters connected to it. For example, a switching circuit in front of each device can be provided. This switching circuit can be connected to the processor of a node and can be switched on or off as desired.

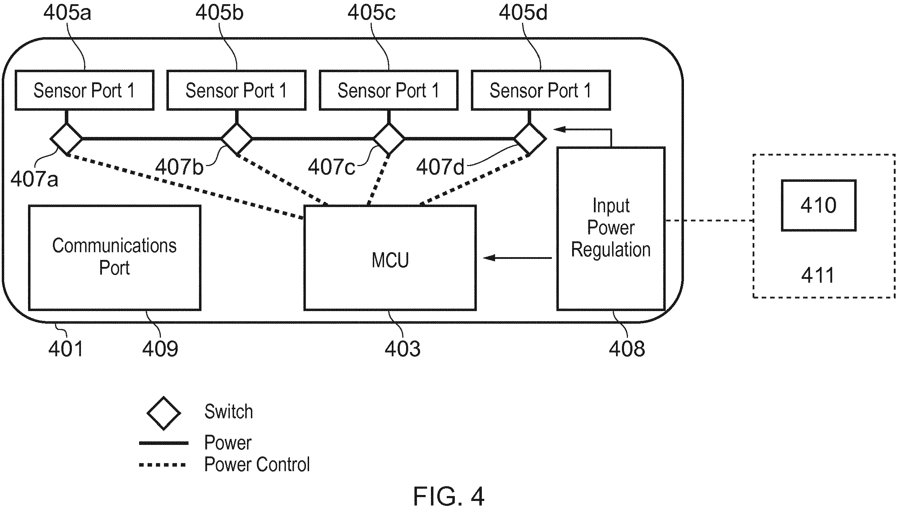

Figure 4 is a schematic representation of a node according to an example. The node 401 has individual sensor device power control. The dash lines between the microcontroller (MCU) 403 and the Sensor Ports 405a-d indicate a programmable control of the sensor port in question. A device can be attached to a sensor port, either removably or permanently. The switch components 407a-d can be a suitably rated transistor. The instructions 408 to switch on or off various sensor ports are determined by the service 410 as described above executing on remote device 411, relayed to the node 401 via the communications port 409, before the MCU 403 implements the instructions by controlling the power to the various sensor ports for example.

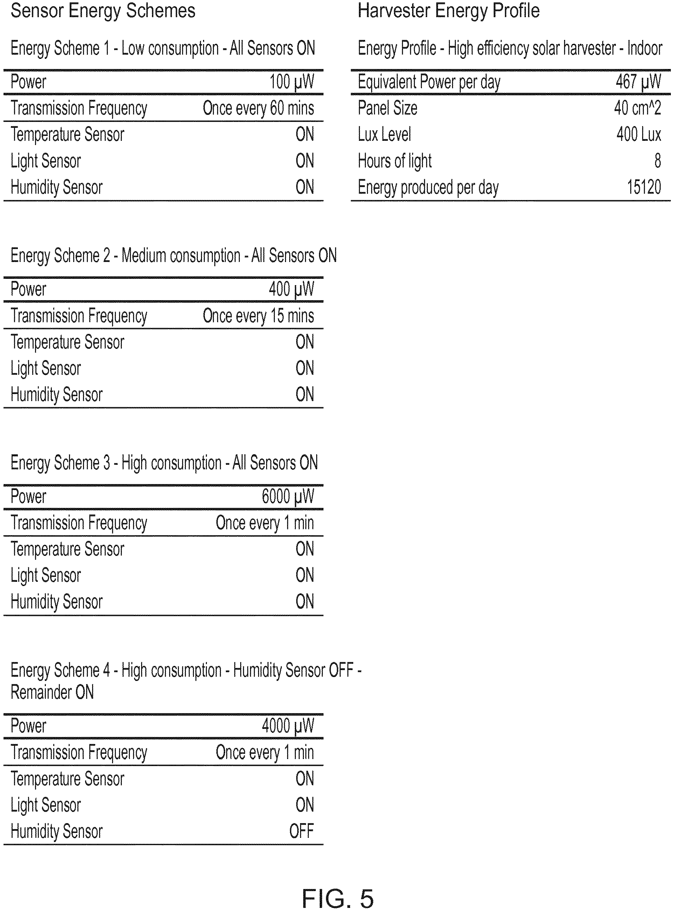

Figure 5 is a set of tables depicting information that could be accessed by the service describing the different power consumption profiles of a node according to an example.

Each energy scheme has different duty cycles controlling the frequency of transmission of sensor data and options on what sensors are on or off. Each scheme has a total power consumption and this value can be used to determine which scheme to implement once information on the energy harvester is provided to the service. In the second column of Figure 5 the power production capability of an indoor solar energy harvester is shown.

When the type of energy harvester is identified to the node and its identification is uploaded to the service, a matching algorithm can be run to determine the best energy scheme that can be satisfied by the power production capability of the energy harvester. In the example case shown in Figure 5, Energy Scheme 2 is chosen and the appropriate instructions to configure the sensor node are generated by the service and relayed to the sensor node.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A computer-implemented method, in a wireless sensor network comprising at least one node operable to receive power from one or more energy sources, for regulating power consumption of the or each node, the method comprising:
providing a power consumption profile for a first node representing power consumption of devices attached to or associated with the first node and its components;
providing a power supply profile for a first energy source operable to supply power to at least the first node, the profile representing the power supply capabilities of the first energy source; and
configuring one or more operational characteristics of the first node on the basis of the power consumption profile and the power supply profile.

2. A method as claimed in claim I, further including:
generating a registration message for transmission from the first node in response to connection, linkage or recognition of the first energy source to or by the first node, the registration message including an identifier unique to the first energy source.

3. A method as claimed in claim 2, further including:
transmitting the registration message to a remote device; and wherein configuring one or more operational characteristics of the first node includes, using the identifier of the first energy source, selecting, from multiple operational profiles, a first operational profile for the first node representing operational characteristics of the first node.

4. A method as claimed in claim 3, wherein selecting the first operational profile includes:
using the identifier of the first energy source, determining the power supply profile of the first energy source;
comparing the power supply capabilities of the first energy source to the multiple operational profiles; and
selecting an operational profile matching the requirements of the power consumption profile for the first node.

5. A method as claimed in any preceding claim, wherein configuring one or more operational characteristics of the first node includes:
selecting a power scheme for the first node; and
adjusting the power consumption level of one or more devices attached to or associated with the first node, and/or its components, on the basis of the selected power scheme.

6. A method as claimed in claim 5, wherein a power consumption level is adjusted by varying the duty cycle of a device of the first node and/or the duty cycle of radio transmissions of the first node and/or by disabling one or more devices of the first node and/or by varying the duty cycle of components within the first node.

7. A method as claimed in any preceding claim, further including configuring the one or more operational characteristics of the first node in response to a detected change in the output of the or each energy source.

8. A system for regulating the power consumption of a node in a wireless sensor network comprising at least one node being operable to receive or draw power from one or more energy sources, the system including:
a remote device operable to store data representing a power consumption profile for a first node representing power consumption of devices attached to or associated with the first node and its components; and a power supply profile for a first energy source operable to supply power to at least the first node, the profile representing the power supply capabilities of the first energy source; the system including a processor operable to process the power consumption profile and the power supply profile and to configure one or more operational characteristics of the first node.

9. A system as claimed in claim 8, wherein the remote device is operable to receive a registration message from a node in response to connection, linkage or recognition of an energy source to or by the node, the registration message including an identifier for the first energy source.

10. A system as claimed in claim 9, wherein the remote device is operable to select, from multiple operational profiles, a first operational profile for the node representing operational characteristics for the node on the basis of the identifier of the energy source.

11. A system as claimed in claim 10, wherein the remote device is operable to:
determine the power supply profile of the energy source using the identifier;
compare the power supply capabilities of the energy source to the multiple operational profiles; and
select an operational profile matching the requirements of the power consumption profile for the node.

12. A system as claimed in claim 11, wherein the remote device is operable to transmit the selected operational profile to the node.

13. A system as claimed in any of claims 8 to 12, wherein the remote device is operable to select a power scheme for the node to enable adjustment of the power consumption level of devices attached to or associated with the first node and/or adjustment of the power consumption level of components of the node.

14. A system as claimed in claim 13, wherein the remote device is operable to generate a power scheme using historic data representing variations in power usage or consumption of the node.

15. A system as claimed in claim 13, wherein the remote device is operable to generate a power scheme using historic data representing variations in power supply capabilities of the energy source.
